(19) Europäisches Patentamt / European Patent Office / Office européen des brevets

(11) **EP 3 168 261 B1**

(12) **EUROPEAN PATENT SPECIFICATION**

(45) Date of publication and mention of the grant of the patent:
**28.08.2019 Bulletin 2019/35**

(51) Int Cl.:
**C08L 23/10** (2006.01)    **C08L 23/14** (2006.01)
**C08F 210/06** (2006.01)    **C08L 23/06** (2006.01)
**C08L 23/16** (2006.01)    **C08K 5/00** (2006.01)

(21) Application number: **15193794.3**

(22) Date of filing: **10.11.2015**

(54) **HETEROPHASIC POLYPROPYLENE COMPOSITION**

HETEROPHASISCHE POLYPROPYLENZUSAMMENSETZUNG

COMPOSITION DE POLYPROPYLÈNE HÉTÉROPHASIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.05.2017 Bulletin 2017/20**

(73) Proprietor: **Borealis AG**
**1220 Vienna (AT)**

(72) Inventors:
• **Aarnio-Winterhof, Minna**
**4203 Altenberg (AT)**
• **Kniesel, Claudia**
**4020 Linz (AT)**
• **Friedrich, Karlheinz**
**7121 Weiden am See (AT)**

• **Gahleitner, Markus**
**4501 Neuhofen/Krems (AT)**
• **Braun, Juliane**
**4040 Linz (AT)**
• **Shutov, Pavel**
**4020 Linz (AT)**

(74) Representative: **Maiwald Patent- und Rechtsanwaltsgesellschaft mbH**
**Elisenhof**
**Elisenstraße 3**
**80335 München (DE)**

(56) References cited:
**EP-A1- 1 659 151      EP-A1- 2 338 656**
**EP-A1- 2 431 416      WO-A1-2011/039314**
**WO-A1-2014/202603**

**Description**

The present invention relates to a heterophasic polypropylene composition with rather high melt flow rate, high stiffness, good impact properties and an advantageous balance between stiffness and impact behaviour.

Still further the present invention is also directed to articles made of the inventive heterophasic polypropylene composition and to the use of the inventive heterophasic polypropylene composition for the production of moulded articles, such as thin-walled plastic containers for packaging.

In the field of thin-wall packaging of the moulding market it is of great importance to have a material of high flowability with good mechanical properties, i.e. stiffness and good impact strength. Good flowability is needed for achieving a good processability in various manufacturing methods of articles, such as injection moulding processes, thereby allowing the production of articles having low wall thicknesses and/or long flow paths in the mould.

The mechanical properties are also critical in view of the thin-walled articles. Particularly, in the field of containers there is a need to hold the content such as food contained therein as well as having sufficient stiffness to be stacked. Heterophasic polypropylene compositions having higher stiffness are especially suitable for being used in applications having thinner wall thicknesses compared to polyolefin compositions of the prior art. Further a reduction in wall thickness goes in hand with better optical properties such as haze or transparency of the final parts.

Finally, materials should also withstand mechanical compression damage, which is frequently incurred by e.g. dropping the articles.

Still further, also the impact behaviour, especially at temperatures below 0°C, should be acceptable, even improved. Especially desirable is a good balance between stiffness and impact behaviour.

However, at least some of these objectives may only be achieved at the expense of other objectives.

Generally speaking, a high degree of crystallinity of heterophasic polypropylene compositions renders the material rather stiff, but it also increases the haze. The crystallinity is influenced by the amount of comonomer contained in the propylene copolymer and by the molecular weight of the polymer chains, i.e. by the molecular weight distribution. A higher amount of comonomer means more interruption of the isotactic polypropylene units and hence less crystallinity, but provides a product having better impact properties. However, the stiffness is reduced thereby. Hence, the balance of stiffness and impact is of great importance.

Therefore, a general problem for heterophasic polypropylene compositions is to balance the conflicting requirements of good processability, stiffness, impact strength and good optical performance, i.e. low haze.

It is known in the art to combine a polypropylene homo- or copolymer matrix phase material with an elastomeric propylene-ethylene copolymer dispersed phase material (EPR rubber). These heterophasic polypropylenes often display better impact strength due to the rubber particles dispersed in the matrix phase. Particularly, the low temperature impact resistance or the biaxial penetration test is improved.

Since the matrix phase and the dispersed phase by definition do not build a homogeneous phase but two phases, also the optical performance will be affected due to the presence of phase boundaries in the material. If the particles of the dispersed phase are too large, i.e. reach the magnitude of the wavelength of light, the refractive indices of the matrix phase and the dispersed phase gain importance. In case of polyolefins, the refractive indices of the two phases may be tuned by controlling the density of the two phases. The size of the particles of the dispersed phase is inter alia influenced by the molecular weight or intrinsic viscosity of the two phases. Hence, an additional task is to carefully select the molecular weight or intrinsic viscosity and/or the density of the different phases.

EP 2594593 A1 relates to a process for the preparation of propylene polymer compositions comprising from 50 to 90 % by weight of a propylene (co)polymer fraction insoluble in xylene at 25°C, and from 10 to 50% by weight of an ethylene copolymer fraction soluble in xylene at 25°C, said process comprising: (i) a first step of polymerizing propylene in the optional presence of ethylene and/or $C_4$ -$C_{10}$ alpha olefins, to produce a propylene (co)polymer being for at least 85% by weight insoluble in xylene at 25°C; and (ii) a successive step, carried out in gas-phase, in the presence of the product coming from step (i), of copolymerizing a mixture of ethylene with one or more alpha-olefins $CH_2$=CHR in which R is a hydrocarbon radical having 1-10 carbon atoms, to produce an ethylene copolymer; the process being carried out in the presence of a catalyst system comprising: the product obtained by contacting: (a) a solid catalyst component comprising a magnesium halide, a titanium compound having at least a Ti-halogen bond and at least two internal electron donor compounds one of which being present in an amount from 35 to 90% by mol with respect to the total amount of donors and being selected from succinates and the other being selected from 1,3-diethers, the total amount of internal electron donor compounds being lower than 14.0% by weight with respect to the total weight of the solid catalyst component; with (b) an aluminum hydrocarbyl compound, and optionally with (c) an external electron donor compound. The patent deals with a two-step-process, capable to deliver compositions with further improved impact properties. However, the patent is not concerned with any improvements on stiffness or optical properties, such as haze or transparency.

EP 1659151 A1 covers propylene polymer compositions comprising 50 - 70 wt% of a propylene homo- or copolymer, 5-20 wt% of a first elastomeric ethylene-propylene copolymer, 5-25 wt% of a second elastomeric ethylene-propylene copolymer and 5 - 30 wt% of an ethylene polymer. The propylene polymer compositions are suitable for moulding and they have low haze and a good impact strength/stiffness balance with good impact strengths at low temperatures. Both LDPE and LLDPE types are used as modifiers together with dimethyldibenzylidenesorbitol (DMDBS) as nucleating agent

EP 2431416 A1 relates to a polypropylene composition having an MFR (230°C/2.16kg) of ≥ 15 g/10min comprising (a) a crystalline polypropylene matrix (b) an elastomeric propylene copolymer phase having a propylene content in the range of 40 to 80 wt%, and an intrinsic viscosity in the range of more than 0.7 to less or equal 2.5 dl/g, (c) a first polyethylene having a density in the range 905 to 925 kg/m 3 and an MFR (190°C/2.16kg) of < 30 g/10min, (d) a second polyethylene having a density of above 915 kg/m 3 , and an MFR (190°C/2.16kg) of ≥30 g/10min. The patent does not mention any nucleating agents and requires the presence of two PE components to improve impact behaviour.

EP 2338656A1 describes a heterophasic polypropylene composition with rather high melt flow rate, high stiffness, acceptable impact properties and an advantageous balance between stiffness and transparency. The heterophasic polypropylene composition comprises at least a propylene homopolymer fraction, a propylene random copolymer fraction, two different ethylene-propylene rubber fractions and an ethylene homo- or copolymer fraction. However, the application is not concerned with combining nucleating agents.

Still there is a constant need for a heterophasic polypropylene composition, which provides good flowability, i.e. a high melt flow rate, good stiffness and good low temperature impact resistance, while keeping good, i.e. low transparency.

Higher stiffness enables the converter to produce articles with thinner wall thickness, still maintaining the overall mechanical properties of the final article. At the same time thinner articles provide better see-through-properties onto the content of said article. So, stiffer polymers are useful to fulfill certain requirements in view of haze or transparency, even if the nominal haze of the material used for the article is higher than with products of the prior art.

Hence, it is an object of the present invention to provide such a material with an improved balance of said properties.

It has now surprisingly been found that the above object can be achieved by a particular heterophasic polypropylene composition characterised by an MFR (230°C/2.16kg) of 30 -200 g/10 min and at least one melting point in the range of 150-165°C and an overall comonomer content of 25.0 to 50.0 wt.-%, comprising

a) 50-85 wt% of a propylene copolymer comprising 0.2 to 1.0 wt% of ethylene and/or a C4-C10 α-olefin having an MFR (230°C/2.16kg) of 50-250 g/10min,
b) 5-25 wt% of an elastomeric propylene copolymer comprising ≥ 60 wt% of ethylene and/or a C4-C10 α-olefin,
c) 10-25 wt% of an ethylene homo- or copolymer having an MFR (190°C/2.16kg) of 10-30 g/10min and a density of 910-920 kg/m$^3$, and
d) at least two α-nucleating agents.

As a special embodiment, a heterophasic polypropylene composition has an MFR (230°C/2.16kg) of 30 -200 g/10 min and at least one melting point in the range of 150-165°C, further characterized by

a) a xylene cold soluble content (XCS) determined according ISO 16152 (25°C) in the range of 15-30 wt% based on the amount of the heterophasic polypropylene composition and
b) a comonomer content of the xylene cold soluble (XCS) fraction of heterophasic propylene copolymer is in the range of 40-60 wt% and optionally
c) a total comonomer content of the heterophasic polypropylene composition in the range of 25-50 wt%.

In another special embodiment, a heterophasic polypropylene composition has a flexural Modulus of at least 900 MPa. when determined according to ISO 178 and either of

b1) a Puncture Energy of at least 8.5 J when determined according to ISO 6603 at 1 mm plaques at +23°C and a test speed of 4.4 m/sec or
b2) a Puncture Energy of at least 5.5 J when determined according to ISO 6603 at 1 mm plaques at -20°C and a test speed of 4.4 m/sec or
b3) a haze of 53 % or lower when measured at 1mm plaques

According to another embodiment the present invention encompasses articles comprising the heterophasic polypropylene composition of the present invention.

According still a further embodiment the present invention encompasses the use of the heterophasic polypropylene composition of the present invention for articles containing food, preferably frozen food.

**Detailed description**

The $MFR_2$ of the heterophasic polypropylene composition is at least 30 g/10 min, like 30 - 200, more preferably at least 32 g/10 min, like 32 - 180 g/10 min., more preferably at least 34 g/10 min, like 34 - 160 g/10 min.

The heterophasic polypropylene resin according to the invention has an overall comonomer content of 25.0 to 50.0 wt%, preferably 26.0 to 45.0 wt% and most preferably 27.0 to 40.0 wt%.

The amount of fraction a) in the heterophasic polypropylene composition is preferably in the range of 50 - 85 wt%, preferably 52 - 83 wt%, such as 55 - 80 wt%, based on the heterophasic polypropylene composition.

The propylene copolymer of fraction a) is preferably a propylene random copolymer. Particular preferred comonomers of the propylene copolymer fraction a) are selected from ethylene, 1-butene, 1-pentene, 1-hexene, 1-octene, 4-methyl-1-pentene or 3-methyl-1-pentene, or any combination of these. Most preferred is that the comonomer is ethylene.

It is especially preferred that the comonomer content of the propylene copolymer fraction a) is 0.2 - 1.0 wt%, such as 0.4 - 0.9 wt%.

The $MFR_2$ of fraction a) is least 50 g/10 min, like 50 - 250, preferably at least 60 g/10 min, like 60 - 200 g/10 min, more preferably in the range of 60 - 150 g/10 min.

It is further preferred that the propylene copolymer of fraction a) has a low content of xylene cold solubles (XCS), said XCS being in the range of 2.0 - 6.0 wt%, more preferably in the range of 2.5 - 5.5 wt%, like in the range of 3.0 - 5.0 wt%.

The heterophasic polypropylene composition according to the present invention, especially the propylene copolymer of fraction a) may comprise a propylene homopolymer fraction a1) and a propylene random copolymer fraction a2).

The amount of fraction a1) in the heterophasic polypropylene composition is in the range of 35 - 50 wt% based on the amount of the heterophasic polypropylene composition, preferably 35 - 46 wt%, more preferably in the range of 37 - 44 wt%.

The amount of fraction a2) in the heterophasic polypropylene composition is preferably in the range of 20 - 35 wt% based on the amount of the heterophasic polypropylene composition, more preferably in the range of 25 - 38 wt%.

Preferably, the $MFR_2$ of the propylene homopolymer fraction a1) is in the range of 50 - 300 g/10 min, more preferably in the range of 60 - 200 g/10 min.

Preferably, the $MFR_2$ of the propylene random copolymer obtained during the polymerization of fraction a2) is in the range of 50 - 200 g/10 min, more preferably in the range of 55 - 150 g/10 min.

Preferably, the propylene homopolymer obtained during the polymerization of fraction a1) has similar $MFR_2$-value as the propylene random copolymer obtained during the polymerization of fraction a2), i.e, the MFR of fraction a1) is within 70 - 130 % of the MFR value of fraction a2). It is further preferred that the MFR of fraction a1) is within 85 - 115 % of the MFR value of fraction a2).

Present inventors believe that the comonomer content of the fraction a) and a2) respectively contributes essentially to the overall properties of the heterophasic polypropylene composition.

The comonomer content of the propylene random copolymer obtained during the polymerization step of fraction a2) is usually at least 0.3 wt%, preferably at least 0.5 wt%.

It is further preferred, that the comonomer content of the propylene random copolymer obtained during the polymerization step of fraction a2) is usually in the range of 0.5 to 2.0 wt%, such as 0.8 - 1.8 wt%.

**Fraction B**

The amount of fraction b) in the heterophasic polypropylene composition is in the range of 5 - 25 wt%, preferably in the range of 8 - 22 wt%, more preferably in the range of 10 - 20 wt%.

It is preferred that the elastomeric propylene copolymer comprising $\geq$ 60 wt% of ethylene and/or a C4-C10 $\alpha$-olefin obtained during the polymerization of fraction b) predominantly comprises ethylene as comonomer. The ethylene content of the elastomeric ethylene-propylene copolymer obtained during the polymerization of fraction b) is at least 60 wt%, preferably in the range of 60 - 95 wt%, such as 65 - 95 wt%.

The fraction b) of the heterophasic polypropylene composition according to the present invention may further comprise two different ethylene-propylene rubber fractions b1) and b2).

The amount of fraction b1) in the heterophasic polypropylene composition is preferably in the range of 5 - 18 wt%, more preferably in the range of 6 - 15 wt%, based on the amount of the heterophasic polypropylene composition.

The amount of fraction b2) in the heterophasic polypropylene composition is preferably in the range of 1 - 10 wt%, more preferably in the range of 2 - 8 wt%, based on the amount of the heterophasic polypropylene composition.

It is preferred, that both the ethylene-propylene copolymers obtained during the polymerization of fraction b1) and b2) predominantly comprise ethylene as comonomer. Preferably, the ethylene contents of the elastomeric ethylene-propylene copolymer fractions b1) and b2) independently from each other is in the range of 60 - 95 wt %, such as 65 - 95 wt%.

**Fraction C)**

The ethylene homo- or copolymer fraction c) contributes to a great extent to the dispersed phase and thereby fine-tunes the density of the dispersed phase in view of the density of the matrix phase which is normally higher than the density of the dispersed phase.

The amount of the ethylene homo- or copolymer fraction c) in the heterophasic polypropylene composition is in the range of 10 - 25 wt%, preferably in the range of 13 - 22 wt%, more preferably in the range of 15 - 20 wt%.

The ethylene homo- or copolymer of fraction c) has a density measured according to ISO 1183 of 910 - 920 $kg/m^3$. It is preferably composed of more than 90 wt% ethylene monomer units, more preferably more than 95 wt% ethylene monomer units and most preferably more than 99 wt% ethylene monomer units. Very preferably, said fraction c) is an ethylene homopolymer.

The ethylene homo- or copolymer of fraction c) has a melt flow rate MFR at 190°C and a load of 2.16kg (ISO 1133) of 10 to 30 g/min, more preferably 12 to 25 g/10min.

Preferably, the ethylene homo- or copolymer fraction c) is added after blending (compounding or reactor blend) of the fractions a) and b), respectively the four fractions a1) to b2).

**Fraction D)**

Fraction d) of the present invention comprises two or more, preferably exactly two $\alpha$-nucleating agents. The amount of fraction d) may be 0.0001-3.0 wt% based on the heterophasic polypropylene composition.

The combined use of nucleating agents based on different structures and nucleation principles enables the preparation of $\alpha$-nucleated heterophasic polypropylene compositions having highly satisfactory optical properties and satisfactory mechanical properties.

Fraction d) of the present invention is a mixture of $\alpha$-nucleating agents, selected from the group consisting of:

(i) salts of monocarboxylic acids and polycarboxylic acids, e.g. sodium benzoate or aluminum tert-butylbenzoate; and

(ii) dibenzylidenesorbitol (e.g. 1 ,3 : 2,4 dibenzylidenesorbitol) and C1-C8- alkyl-substituted dibenzylidenesorbitol derivatives, such as methyldibenzylidenesorbitol, ethyldibenzylidenesorbitol or dimethyldibenzylidenesorbitol (e.g. 1,3 2,4 di(methylbenzylidene) sorbitol), or substituted nonitol-derivatives, such as 1,2,3,-trideoxy-4, 6:5,7- bis-O-[(4-propylphenyl)methylene]-nonitol, wherein 1,3 2,4 di(methylbenzylidene) sorbitol is preferred and

(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and hydroxybis (2,4,8,10-tetra-tert- butyl-6-hydroxy-12Hdibenzo(d,g)(1,3,2) dioxaphosphocin 6-oxidato) aluminium, wherein hydroxybis (2,4,8,10-tetra-tert-butyl-6-hydroxy-12H-dibenzo(d,g)(1,3,2) dioxaphosphocin 6-oxidato) aluminium is preferred; and

(iv) polymeric nucleating agents, such as polymerized vinyl compounds, in particular vinyl cycloalkanes, like vinyl cyclohexane (VCH), poly(vinyl cyclohexane) (PVCH), vinylcyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred.

It is especially preferred that one of the two or more, preferably exactly two, nucleating agents comprised in the heterophasic polypropylene composition of the present invention is selected from the group of polymeric nucleating agents (iv) of above list.

Alternatively preferred is that one of the two or more, preferably exactly two nucleating agents comprised in the heterophasic polypropylene composition of the present invention is selected from the group of sorbitol-based nucleating agents (ii) or from the group of salts of phosphoric acid based nucleating agents (iii) of above list.

In a further preferred embodiment of the invention one of the two or more, preferably exactly two nucleating agents comprised in the product of the present invention is selected from the group of polymeric nucleating agents (iv) and the other either from the group of sorbitol-based nucleating agents (ii) or from the group of salts of phosphoric acid based nucleating agents (iii).

In a further preferred embodiment of the invention two of the two or more, nucleating agents comprised in the product of the present invention are dimethyldibenzylidenesorbitol (e.g. 1 ,3, 2,4 di(methylbenzylidene) sorbitol) and poly(vinyl cyclohexane) (PVCH).

In still a further preferred embodiment of the invention two of the two or more, nucleating agents comprised in the product of the present invention are hydroxybis (2,4,8,10-tetra-tert-butyl-6-hydroxy-12H-dibenzo(d,g)(1,3,2) dioxaphosphocin 6-oxidato) aluminum and poly(vinyl cyclohexane) (PVCH).

Polymeric nucleating agents from group (iv) can either be incorporated by in-reactor nucleation or by the so called Masterbatch technology (compounding technology) as mentioned below.

In a preferred embodiment of the present invention, the polymeric nucleating agent is introduced into the heterophasic polypropylene composition by means of a suitably modified catalyst, into the reactor (i.e. **in-reactor nucleation**) i.e. the catalyst to be used in catalysing the polymerization of any of the fractions a) or b), preferably a) is subjected to a polymerization of a suitable monomer for the polymeric nucleating agent to produce first said polymeric nucleating agent. The catalyst is then introduced together with the obtained polymeric nucleating agent to the actual polymerization step of the propylene polymer component(s).

In a particularly preferred embodiment of the present invention, the propylene polymer is prepared in the presence of such a modified catalyst to obtain said reactor made heterophasic polypropylene composition. With such modified catalyst, it is also possible to carry out the above-identified preferred polymerization sequence for the preparation of in-situ blended multimodal, including bimodal, polypropylenes.

The polymeric nucleating agent introduced via in-reactor-nucleation usually is present in the final product in an amount of from at least 10 ppm, typically at least 13 ppm, (based on the weight of the heterophasic polypropylene composition). Preferably this agent is present in the heterophasic polypropylene composition in a range of from 10 to 1000 ppm, more preferably from 15 to 500 ppm, such as 20 to 100 ppm.

In case of applying in-reactor nucleation, the inventive composition comprises a propylene homo- or copolymer fraction received from a step of pre-polymerization which is carried out before the polymerization of the first fraction as defined above. More preferably, said fraction is a propylene homopolymer fraction.

The polymeric nucleating agent may also be present in the final product also in lower concentrations, like in an amount of from at least 0.5 ppm, typically at least 1.0 ppm, (based on the weight of the heterophasic polypropylene composition). Preferably this agent is present in the $\alpha$-nucleated heterophasic polypropylene composition in a range of 2 to 100 ppm, more preferably from 3 to 80 ppm, such as 5 to 50 ppm.

Another embodiment, different to the above mentioned in-reactor blend, is a mechanical blend of a polymer with a nucleating agent, wherein the polymer is first produced in the absence of a polymeric nucleating agent and is then blended mechanically with the polymeric nucleating agent or with a small amount of nucleated polymer or with polymers, which already contain the polymeric nucleating agent (so-called **master batch technology**) in order to introduce the polymeric nucleating agent into the polymer mixture. The preparation of a reactor made polymer composition ensures the preparation of a homogenous mixture of the components, for example a homogenously distributed polymeric nucleating agent in the heterophasic polypropylene composition, even at high concentrations of polymer nucleating agent.

As outlined above, the **reactor made polymer** composition is a preferred embodiment of the present invention, although also mechanical blends prepared, for example, by using master batch technology are envisaged by the present invention.

The heterophasic polypropylene composition according to the present invention may be further defined by the analytical fractions which are soluble (XCS) in xylene.

Preferably the amount of the fraction soluble in cold xylene (XCS) is at least 15 wt% based on the amount of the heterophasic polypropylene composition, such as at least 16 wt%, like 17 wt%.

Preferably the amount of the fraction soluble in cold xylene (XCS) is at most 30 wt% based on the amount of the heterophasic polypropylene composition, such as at least 25 wt%, like 22 wt%. Especially preferred are XCS values for the heterophasic polypropylene composition to be within 15 - 30 wt%, such as 16 - 25 wt%, like 17 - 22 wt%.

Preferably, the ethylene content of the fraction soluble in cold xylene (XCS) is at least 40 wt%, more preferably at least 43 wt%, like at least 45 wt%.

Preferably, the ethylene content of the fraction soluble in cold xylene (XCS) is at most 65 wt% or below, more preferably at most 60 wt% or below.

According to a specific embodiment, the intrinsic viscosity of the fraction soluble in cold xylene (XCS) is in the range of 0.9 to 2.5 dl/g, preferably in the range of 1.0 to 2.2 dl/g.

**Physical characterization**

The heterophasic polypropylene composition according to the invention has a flexural modulus of at least 900 MPa, preferably at least 930 MPa, still even more preferably at least 950 MPa as determined in accordance with ISO 178 on injection moulded specimens 80*10*4 mm$^3$ (B-bar) prepared in accordance with EN ISO 1873-2.

The flexural modulus of the heterophasic polypropylene resin according to the invention will usually not be higher than 1500 MPa, like not higher than 1400 MPa.

In a preferred embodiment, a specimen consisting of the heterophasic polypropylene composition and having a thickness of 1 mm preferably has a puncture energy at +23°C of at least 8.5 J, more preferably of at least 9.0 J, determined according to ISO 6603-2 at a test speed of 4.4 m/sec, and at - 20°C of at least 5.5 J, more preferably at least 6.0 J determined according to ISO 6603-2 at a test speed of 4.4 m/sec.

Furthermore, an injection moulded specimen of 60x60x1 mm$^3$ consisting of the heterophasic polypropylene composition preferably has a puncture energy at +23°C of not more than 60, more preferably of not more than 50 J determined according to ISO 6603-2 at a test speed of 4.4 m/sec, and at -20°C of not more than 30 J, more preferably not more than 25 J determined according to ISO 6603-2 at a test speed of 4.4 m/sec.

Furthermore, the heterophasic polypropylene composition preferably has a haze of lower than 55.0 %, preferably lower than 52.0 % more preferably lower than 50.0 %, even more preferably lower than 48.0 %, as determined on a 1 mm thick injection moulded plaque samples according to ASTM D1003. The haze will normally be higher than 10.0%, like higher than 20%.

In a special embodiment the heterophasic polypropylene composition is characterized by having a flexural Modulus of at least 900 MPa. when determined according to ISO 178 and any two of

> b1) a Puncture Energy of at least 8.5 J when determined according to ISO 6603 at 1 mm plaques at +23°C and a test speed of 4.4 m/sec or
> b2) a Puncture Energy of at least 5.5 J when determined according to ISO 6603 at 1 mm plaques at -20°C and a test speed of 4.4 m/sec or
> b3) a haze of 55 % or lower when measured at 1mm plaques

In a preferred embodiment the heterophasic polypropylene composition is characterized by having a flexural Modulus of at least 900 MPa. when determined according to ISO 178 and

> b1) a Puncture Energy of at least 8.5 J when determined according to ISO 6603 at 1 mm plaques at +23°C and a test speed of 4.4 m/sec and
> b2) a Puncture Energy of at least 5.5 J when determined according to ISO 6603 at 1 mm plaques at -20°C and a test speed of 4.4 m/sec and
> b3) a haze of 55 % or lower when measured at 1mm plaques

The preferred high values for Flexural Modulus indicate excellent stiffness of the heterophasic polypropylene composition. Higher stiffness enables the converter to produce articles having thinner wall thickness and still maintaining the overall mechanical properties of the final article. At the same time thinner articles provide better see-through-properties on the content of the article.

The preferred high values for puncture energy at +23°C and at -20°C indicate excellent impact properties of the polypropylene resin even at low temperatures and maintaining at the same time low haze.

According to a further specific embodiment, the heterophasic polypropylene composition is characterized by a specific ratio between stiffness and transparency, more specifically the flexural modulus (FM) and the haze (H) as defined above. The ratio (R) calculated as

$$R = FM[MPa] / H[\%]$$

will then be in the range of 15 to 27, like in the range of 17 to 25.

Owing to the preferred sequential production of the at least four fractions a1) to b2) it is not possible to measure each of the properties of the individual at least four fractions discussed above.

Hence the properties of the individual fractions have to be calculated based on the properties of the preceding step and the properties of the polymer before and including the respective fraction.

Generally speaking, it is not possible to divide a final base resin or heterophasic polypropylene composition into the fractions the base resin was built-up by in the production process.

The heterophasic polypropylene composition according to the present invention apart from the polymeric components may comprise further components, e.g. additives for different purposes. The entirety of polymeric components constitutes the so-called base resin.

Usually any such additives are added to the base resin by compounding.

Suitable additives include stabilizers, lubricants, pigments, additional (further) nucleating agents and foaming agents. Preferably the additives are selected from the group of stabilizers, lubricants, pigments, nucleating agents and foaming agents. Depending on the type of additive, these may be added in an amount of 0.0001 to 2 wt%, based on the weight of the heterophasic polypropylene composition.

The heterophasic polypropylene composition according to the present invention may also comprise further polyolefin fractions

As is explained herein, the polymer components of the present invention can be produced in a sequential step process, using reactors in serial configuration and operating at different reaction conditions. As a consequence, each fraction prepared in a specific reactor may have its own molecular weight distribution, its own comonomer content or its own comonomer distribution.

The propylene copolymer of fraction a) can be multimodal, such as bimodal, as regards the comonomer or molecular weight distribution, since it is to a great extent composed of a propylene homopolymer fraction a1) and a propylene random copolymer fraction a2) as defined above.

The elastomeric propylene copolymer of fraction b) may also be multimodal, such as bimodal, as regards the ethylene distribution since it may be composed of at least two ethylene-propylene rubber fractions b1) and b2) having different ethylene content.

In the following we present a process suitable for the preparation of a heterophasic polypropylene composition comprising preparation of the fractions a1), a2), b1) and b2) as defined above in any sequence, wherein the fractions are produced in different reactors connected in series and each fraction is produced in the presence of the product produced in the preceding reactor(s) except for the first fraction. Said process further includes adding of fraction c) in a step of compounding.

For the present invention, conventional bulk phase and gas phase reactors, which are commonly known in the relevant technical field can be used. Preferably, the bulk phase reactors are conducted in a continuous loop arrangement, i.e. so-called loop reactors.

The gas-phase polymerization reactor preferably comprises one or more vertical fluidised beds. Nitrogen and monomers in the gaseous state, as well as the catalyst are preferably fed to the reactor and the solid product is removed continuously or periodically, preferably continuously. The heat of reaction is dissipated through the use of the circulating gas that also serves to fluidise the polymer bed. Solvents are not used, thereby eliminating the need for solvent stripping, washing and drying.

The conditions for preparation of the two fractions a1) and a2) are within the limits of conventional conditions for preparation of propylene homopolymers and random copolymers and are disclosed e.g. in EP 2 014 714.

In general, the conditions for the preparation of the elastomeric copolymer fractions b1) and b2) are within the limits of conventional conditions for ethylene-propylene rubber (EPM) production. Typical conditions are disclosed e.g. in Encyclopaedia of Polymer Science and Engineering, second edition, vol. 6, p. 545-558.

For the production of the heterophasic polypropylene composition of the present invention each of the fractions a1) to b2) and optionally further fractions are produced in different reactors, which reactors are connected in series, and each fraction is produced in the presence of the product of the preceding reactor(s) except for the first fraction coming from the pre-polymerization, in the sequence: prepolymerization, propylene homopolymer fraction a1), propylene random copolymer fraction a2), first elastomeric propylene copolymer fraction b1), second elastomeric propylene copolymer fraction b2), wherein the propylene homopolymer fraction a1) is produced in a loop reactor and the propylene random copolymer fraction a2), b1) and b2) in gas phase reactors.

As a first step a pre-polymerization of a propylene homo- or copolymer fraction as pointed out above, is carried out.

In the process a catalyst for the preparation of the heterophasic polypropylene composition is applied. This catalyst can be any stereo-specific catalyst for propylene polymerization, which preferably is capable of catalysing the polymerization and copolymerization of propylene and comonomers at a pressure of 500 to 10000 kPa, in particular 2500 to 8000 kPa, and at a temperature of 40 to 110°C, in particular of 60 to 110°C. Preferably, the catalyst comprises a high-yield Ziegler-Natta type catalyst including an internal donor component, which can be used at high polymerization temperatures of 80°C or more.

Preferred is the catalyst Avant ZN180 provided by LyondellBasell.

Alternatively preferred is a catalyst based on citraconate as internal donor as disclosed in EP14174690.9, Inventive Example1.

Suitable external donors include dicyclo pentyl dimethoxy silane (donor D), cyclo hexyl methyl dimethoxy silane (donor C), diethylaminotriethoxysilane (donor U).

The Al/Do-ratio may vary to a great extent. The higher the ratio, the better the $H_2$-response thereby allowing producing polymers with higher values of $MFR_2$, hence having a higher flowability. The ratio is usually between 2 and 60 mol/mol.

The catalyst is preferably present in the first polymerization step and is transferred together with the product to further polymerization steps.

The nucleating agents (apart of those that are introduced into the polymer via in-reactor technology) and optionally further additives are added to the heterophasic polypropylene base resin, which is collected from the final reactor of the series of reactors, to generate the heterophasic polypropylene composition of the invention. In case the base resin is prepared by compounding of the at least five fractions defined above, any additives may be added together or after said compounding step. In case of a rector blend of fractions a1), a2), b1) and b2), the addition of any additives may be carried out together or after addition of the ethylene homo- or copolymer fraction c).

Preferably, these additives are mixed into the composition prior to or during the extrusion process in a one-step compounding process. Alternatively, a master batch may be formulated, wherein the heterophasic polypropylene base resin is first mixed with only some of the additives.

For mixing, a conventional compounding or blending apparatus, e.g. a Banbury mixer, a 2-roll rubber mill, Buss-co-kneader or a twin screw extruder may be used. The twin screw extruder may be co-rotating or counter-rotating, preferably co-rotating. Preferably, the composition will be prepared by blending the additives together with the polymeric material at a temperature, which is sufficiently high to soften and plasticize the polymer. The temperatures and pressures used in the operation of the extruder are known in the art. Typically the temperature may be selected from the range of 150 to 350°C. The pressure used for extrusion preferably is 50 to 500 bar. The polymer materials recovered from the extruder are usually in the form of pellets. These pellets are then preferably further processed, e.g. by injection moulding to generate articles and products of the inventive compositions.

As a special embodiment, the present invention relates to articles comprising the heterophasic polypropylene composition according to the invention produced by any common conversion process suitable for thermoplastic polymers like injection moulding, extrusion blow moulding, injection stretch blow moulding, thermoforming or cast film extrusion. Articles produced by injection moulding are preferred. The articles preferably are thin-walled articles having a wall thickness of 300 micrometer to 2 mm. More preferably the thin-walled articles have a wall thickness of 300 micrometer to 1400 micrometer, and even more preferably the thin-walled articles have a wall thickness of 300 micrometer to 900 micrometer.

The articles of the current invention can be containers, such as cups, buckets, beakers, trays or parts of such articles, such as see-through-windows, lids, or the like.

The articles of the current invention are especially suitable for containing food, especially frozen food, such as ice-cream, frozen liquids, sauces, pre-cooked convenience products, and the like.

**Examples:**

**Measuring methods**

**a) Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene is determined at a temperature of 230°C and a load of 2.16 kg for polypropylenes and at 190°C for polyethylenes.

In the case of e.g. sequential polymerization, when e.g. polymer resin (b) is produced in the presence of a polymer resin (a), the MFR of polymer resin (b) can be calculated applying the formula given here:

$$\log MFR_{final} = w.\log(MFR_a) + (1-w).\log(MFR_b)$$

Therein

MFR$_{final}$ denotes the MFR of the blend consisting of polymer resins (a) and (b),
MFR$_a$ denotes the MFR of polymer resin (a),
MFR$_b$ denotes the MFR of polymer resin (b),
w denotes the relative amount of polymer resins (a) in the resulting blend.

**b) Xylene Soluble Fraction and Amorphous Phase**

The xylene soluble fraction (XCS) as defined and described in the present invention is determined as follows: 2.0 g of the polymer were dissolved in 250 ml p-xylene at 135°C under agitation. After 30 minutes, the solution was allowed to cool for 15 minutes at ambient temperature and then allowed to settle for 30 minutes at 25 ± 0.5°C. The solution was filtered with filter paper into two 100 ml flasks. The solution from the first 100 ml vessel was evaporated in nitrogen flow and the residue dried under vacuum at 90°C until constant weight is reached. The xylene soluble fraction (percent) can then be determined as follows:

$$XCS\% = (100 \times m_1 \times v_0)/(m_0 \times v_1),$$

wherein $m_0$ designates the initial polymer amount (grams), $m_1$ defines the weight of residue (grams), $v_0$ defines the initial volume (millilitre) and $v_1$ defines the volume of the analysed sample (millilitre).

The fraction insoluble in p-xylene at 25°C (XCU) is then equal to 100% - XCS%.

The solution from the second 100 ml flask was treated with 200 ml of acetone under vigorous stirring. The precipitate was filtered and dried in a vacuum oven at 90°C. This solution can be employed in order to determine the amorphous part (AM) of the polymer (wt%) using the following equation:

$$AM = (100 \times m_1 \times v_0)/(m_0 \times v_1)$$

wherein $m_0$ designates the initial polymer amount (g), $m_1$ defines the weight of residue (g), $v_0$ defines the initial volume (ml) and $v_1$ defines the volume of the analysed sample (ml).

**c) Intrinsic Viscosity**

The intrinsic viscosity (IV) value increases with the molecular weight of a polymer. The intrinsic viscosity of the XCU and the XCS fraction is measured in decalin at 135°C according to DIN EN ISO 1628-1 and -3.

**d) DSC analysis, melting temperature (Tm) crystallization temperature (Tc)**

DSC parameters are measured with a TA Instrument Q2000 differential scanning calorimetry (DSC) on 5 to 7 mg samples. DSC is run according to ISO 11357 / part 3 /method C2 in a heat / cool / heat cycle with a scan rate of 10°C/min in the temperature range of -30 to +225°C. Crystallization temperature and heat of crystallization (Hc) are determined from the cooling step, while melting temperature and heat of fusion (Hf) are determined from the second heating step.

**e) Density**

The density is measured according to ISO 1183-1 - method A (2004). Sample preparation is done by compression moulding in accordance with ISO 1872-2:2007

**f) Flexural Modulus**

The Flexural Modulus is determined in 3-point-bending according to ISO 178 on injection molded specimens of 80 x 10 x 4 $mm^3$ prepared in accordance with EN ISO 1873-2.

**g) Haze**

Haze and transparency are determined from 1 mm thick injection molded plaque samples according to ASTM D1003-A using a hazegard + hazemeter byk-gardner.

**h) Puncture Energy (Instrumented Penetration Test, IPT)**

The puncture energy is measured in biaxial penetration tests according to ISO 6603-2 at 23°C and at -20°C using a lubricated bolt on plaques, 60 x 60 x 1 $mm^3$, injection moulded according to ISO 1873-2, with a test-speed of 4.4 m/sec.

In each of the following examples the first fraction a1) has been produced in a loop reactor, fractions two to four, i.e. a2), b1) and b2) have been produced in gas phase reactors.

The properties of the products obtained from the individual reactors naturally are not measured on homogenized material but on reactor samples (spot samples). The properties of the final resin are measured on homogenized material, the $MFR_2$ on pellets made thereof.

Within this patent application all description of properties "of a certain fraction" is to be understood to include also all the polymer fractions produced before and including the respective fraction. This will be clear for every person working with multistage polymerization.

So, e.g. a wording such as "The comonomer content of the propylene random copolymer fraction a2)" is to be understood as "comonomer content of all the fraction produced before and including fraction a2)".

It is further clear that any property of polymers obtained within a certain polymerization step can only be determined by calculating these based on the properties of the preceding step and the properties of the polymer available after a certain step. Such properties will then be denominated as "obtained within" a certain polymerization step or "calculated".

**Polymerization**

The catalyst used in the polymerization processes was the commercial ZN180 of Basell with triethyl-aluminium (TEA) as co-catalyst and dicyclo pentyl dimethoxy silane (donor D) as donor.

The Al/donor ratio was 5 mol/mol, and the Al/Ti ratio was 200 mol/mol. A Borstar PP pilot plant comprised of a stirred-tank prepolymerization reactor (R1), a liquid-bulk loop reactor (R2) and three gas phase reactors (R3 to R5) was used for the main polymerization. The resulting polymer powders were compounded in a co-rotating twin-screw extruder Coperion ZSK 57 at 220°C with 0.2 wt.-% of Irganox B225 (1:1-blend of Irganox 1010 (Pentaerythrityl-tetrakis(3-(3',5'-di-tert.butyl-4-hydroxytoluyl)-propionate and tris (2,4-di-t-butylphenyl) phosphate) phosphite) of BASF AG, Germany) and 0.1 wt.-% calcium stearate and the below described nucleating agents and the polyethylene component as indicated.

The polymeric nucleating agent was incorporated via so called **Masterbatch-Technology:** 2 wt% of a polypropylene-homopolymer comprising polymeric nucleating agent was compounded into Polymers A or B respectively, as indicated in Table 2 below.

The polypropylene homopolymer used for nucleation via Masterbatch Technology was produced as follows:

a) Catalyst preparation

3,4 litre of 2-ethylhexanol and 810 ml of propylene glycol butyl monoether (in a molar ratio 4/1) were added to a 20 l reactor. Then 7,8 litre of a 20 % solution in toluene of BEM (butyl ethyl magnesium) provided by Crompton GmbH were slowly added to the well stirred alcohol mixture. During the addition the temperature was kept at 10°C. After addition the temperature of the reaction mixture was raised to 60°C and mixing was continued at this temperature for 30 minutes. Finally after cooling to room temperature the obtained Mg-alkoxide was transferred to storage vessel.

21,2 g of Mg alkoxide prepared above was mixed with 4,0 ml bis(2-ethylhexyl) citraconate for 5 min. After mixing the obtained Mg complex was used immediately in the preparation of catalyst component.

19,5 ml titanium tetrachloride was placed in a 300 ml reactor equipped with a mechanical stirrer at 25°C. Mixing speed was adjusted to 170 rpm. 26,0 of Mg-complex prepared above was added within 30 minutes keeping the temperature at 25°C . 3,0 ml of Viscoplex 1-254 and 1,0 ml of a toluene solution with 2 mg Necadd 447 was added. Then 24,0 ml of heptane was added to form an emulsion. Mixing was continued for 30 minutes at 25°C. Then the reactor temperature was raised to 90°C within 30 minutes. The reaction mixture was stirred for further 30 minutes at 90°C. Afterwards stirring was stopped and the reaction mixture was allowed to settle for 15 minutes at 90°C.

The solid material was washed 5 times: Washings were made at 80°C under stirring 30 min with 170 rpm. After stirring was stopped the reaction mixture was allowed to settle for 20-30 minutes and followed by siphoning.

    Wash 1: Washing was made with a mixture of 100 ml of toluene and 1 ml donor
    Wash 2: Washing was made with a mixture of 30 ml of TiCl4 and 1 ml of donor.
    Wash 3: Washing was made with 100 ml toluene.
    Wash 4: Washing was made with 60 ml of heptane.
    Wash 5. Washing was made with 60 ml of heptane under 10 minutes stirring.

Afterwards stirring was stopped and the reaction mixture was allowed to settle for 10 minutes decreasing the temperature to 70°C with subsequent siphoning, and followed by $N_2$ sparging for 20 minutes to yield an air sensitive powder.

b) VCH modification of the catalyst

**[0136]** - 35 ml of mineral oil (Paraffinum Liquidum PL68) was added to a 125 ml stainless steel reactor followed by 0,82 g of triethyl aluminium (TEAL) and 0,33 g of dicyclopentyl dimethoxy silane (donor D) under inert conditions at room temperature. After 10 minutes 5,0 g of the catalyst prepared in 1a (Ti content 1,4 wt%) was added and after additionally 20 minutes 5,0 g of vinylcyclohexane (VCH) was added.).The temperature was increased to 60°C during 30 minutes and was kept there for 20 hours. Finally, the temperature was decreased to 20°C and the concentration of unreacted VCH in the oil/catalyst mixture was analysed and was found to be 120 ppm weight.

c) Polymerization

41 mg of donor D (TEAL/Donor ratio 10 mol/mol) and 206 mg of TEAL(TEAL/Ti ratio 250 mol/mol) was mixed with 30 ml of pentane. Donor to titanium was 25 mol/mol. Half of this mixture was added to the 5 litre stirred reactor and half was added to 209 mg of the oil/catalyst mixture (=124,7 mg of dry catalyst). After 10 minutes the pentane/catalyst/TEAL/donorD mixture was added to the reactor, followed by 300 mmol H2 and 1,4 kg of propylene at room temperature. The temperature was increased to 80°C during 16 minutes and was kept at this temperature for 1 hour. Unreacted propylene was flashed out by opening the exhaust valve. The reactor was opened and the polymer powder was collected and weighed.

Table 2 summarizes the compositions of the inventive and comparative examples. All three inventive examples (IE1-IE3) and the first two comparative examples (CE1 & CE2) are based on the polymers A and B for which polymerization is described above and in Table 1 and 3. Inventive example IE3 differs from IE1 only by the type and amount of nucleating agent, substituting 0.2 wt% of 1,3 : 2,4 di(methylbenzylidene) sorbitol (DMDBS, commercially available as Millad 3988 of Milliken Co., USA) by 0.1 wt% of a mixture of aluminium-hydroxybis[2,2'-methylene-bis(4,6-di-t-butylphenyl)phosphate] and lithium myristate (commercially available as Adekastab NA-21 of Adeka Palmarole, France). Comparative example CE3 is identical to the inventive example E1 of EP 2516125 A1.

Table 4 listing the mechanical and optical characterisation results shows the advantageous performance of the inventive compositions.

Table 1 - Polymerization data

|  |  | Polymer A | Polymer B |
|---|---|---|---|
| Catalyst |  | ZN180 | ZN180 |
| Al/Ti ratio | mol/mol | 200 | 200 |
| Al/donor ratio | mol/mol | 5 | 5 |
| **Loop** |  |  |  |
| Split | wt% | 48.8 | 46.2 |
| Temperature | °C | 70 | 70 |
| H2/C3 ratio | mol/kmol | 4.59 | 4.64 |
| C2/C3 ratio | mol/kmol | 0 | 0 |
| $MFR_2$(PP-H) | g/10min | 71 | 70 |
| **GPR1** |  |  |  |
| Split | wt% | 34.4 | 34.8 |
| Temperature | °C | 80 | 80 |
| H2/C3 ratio | mol/kmol | 39.1 | 39.5 |
| C2/C3 ratio | mol/kmol | 11.7 | 12.2 |
| C2(PP-H&R) | wt% | 0.70 | 0.66 |
| $MFR_2$(PP-H&R) | g/10min | 68 | 66 |
| XCS(PP-H&R) | wt% | 3.5 | 3.5 |
| **GPR2** |  |  |  |
| Split | wt% | 11.1 | 13.4 |
| Temperature | °C | 75 | 75 |
| H2/C2 ratio | mol/kmol | 320 | 340 |
| C2/C3 ratio | mol/kmol | 780 | 1040 |
| C2(GPR2) | wt% | 9.3 | 11.7 |
| XCS(GPR2) | wt% | 16.4 | 17.2 |
| $MFR_2$(GPR2) | g/10min | 54 | 45 |

(continued)

| GPR3 | | | |
|---|---|---|---|
| Split | wt% | 5.7 | 5.6 |
| Temperature | °C | 80 | 80 |
| H2/C2 ratio | mol/kmol | 324 | 327 |
| C2/C3 ratio | mol/kmol | 770 | 346 |
| C2(HECO) | wt% | 14.4 | 13.5 |
| $MFR_2$(HECO) | g/10min | 43 | 41 |
| XCS(HECO) | wt% | 21.5 | 21.6 |
| C2(XCS,HECO) | wt% | 50.2 | 50.8 |

Table 2 - Composition of inventive and comparative examples Polymeric NA: masterbatch with polymeric nucleating agent; 2nd NA - [a] DMDBS resp. [b] NA-21;

| Example | | IE1 | IE2 | IE3 | CE1 | CE2 | CE3 |
|---|---|---|---|---|---|---|---|
| HECO base | | Polymer A | Polymer B | Polymer A | Polymer A | Polymer B | -- |
| amt. | wt% | 83 | 83 | 83 | 100 | 100 | 85 |
| PE | wt% | 17 | 17 | 17 | 0 | 0 | 15 |
| Polymeric NA | wt% | 2 | 2 | 2 | 2 | 2 | 1 |
| 2nd NA | wt% | 0.2 [a] | 0.2 [a] | 0.1 [b] | 0 | 0 | 0.18 [a] |

Table 3: Matrix composition

| Example | | IE1 | IE2 | IE3 | CE1 | CE2 | CE3 |
|---|---|---|---|---|---|---|---|
| HECO base | | Polymer A | Polymer B | Polymer A | Polymer A | Polymer B | -- |
| amt. | wt% | 83 | 83 | 83 | 100 | 100 | 85 |
| PP-H&R (a) | wt% | 69.1 | 67.2 | 69.1 | 83.2 | 81.0 | 72.0 |
| PP-H (a1) | wt% | 40.7 | 38.8 | 40.7 | 48.8 | 46.2 | 42.1 |
| $MFR_2$(PP-H) | g/10min | 71 | 70 | 71 | 71 | 70 | 280 |
| PP-R (a2) | wt% | 28.4 | 28.4 | 28.4 | 34.4 | 34.8 | 29.9 |
| C2(PP-R) | wt% | 1.68 | 1.54 | 1.68 | 1.68 | 1.54 | 2.4 |
| C2(PP-H&R) | wt% | 0.7 | 0.66 | 0.7 | 0.7 | 0.66 | 1.0 |
| $MFR_2$(PP-R) | g/10min | 65 | 60 | 65 | 65 | 60 | 4.5 |
| $MFR_2$(PP-H&R) | g/10min | 68 | 66 | 68 | 68 | 66 | 49 |
| XCS(PP-H&R) | wt% | 3.5 | 3.5 | 3.5 | 3.5 | 3.5 | 2.9 |
| EPR (b) | wt% | 13.9 | 15.8 | 13.9 | 16.8 | 19.0 | 13.0 |
| C2(EPR) | wt% | 86.9 | 77.5 | 86.9 | 86.9 | 77.5 | 70.0 |
| EPR1 (b1) | wt% | 9.2 | 11.1 | 9.2 | 11.1 | 13.4 | 7.9 |
| C2 (EPR1) | wt% | 78.5 | 83 | 78.5 | 78.5 | 83 | 63 |
| C2 (PP-H&R&EPR1) | wt% | 9.3 | 11.7 | 9.3 | 9.3 | 11.7 | 6.7 |

13

(continued)

| Example | | IE1 | IE2 | IE3 | CE1 | CE2 | CE3 |
|---|---|---|---|---|---|---|---|
| HECO base | | Polymer A | Polymer B | Polymer A | Polymer A | Polymer B | -- |
| XCS (PP-H&R&EPR1) | wt% | 16.4 | 17.2 | 16.4 | 16.4 | 17.2 | 12.4 |
| EPR2 (b2) | wt% | 4.7 | 4.7 | 4.7 | 5.7 | 5.6 | 6.3 |
| C2(EPR2) | wt% | 95 | 71 | 95 | 95 | 71 | 45 |
| C2(HECO) | wt% | 14.4 | 13.5 | 14.4 | 14.4 | 13.5 | 9.1 |
| XCS(HECO | wt% | 21.5 | 21.6 | 21.5 | 21.5 | 21.6 | 15.7 |
| C2(XCS, HECO) | wt% | 50.2 | 50.8 | 50.2 | 50.2 | 50.8 | 49.2 |
| $MFR_2$(HECO) | g/10min | 43 | 41 | 43 | 43 | 41 | 39 |
| PE | wt% | 17 | 17 | 17 | 0 | 0 | 15 |
| Density of PE | $kg/m^3$ | 915 | 915 | 915 | - | - | 915 |
| Polymeric NA | wt% | 2 | 2 | 2 | 2 | 2 | 1 |
| 2nd NA | wt% | 0.2 [a] | 0.2 [a] | 0.1 [b] | 0 | 0 | 0.18 [a] |
| $MFR_2$ (PE.190°C) | g/10min | 15 | 15 | 15 | - | - | 15 |
| $MFR_2$ (composition) | g/10min | 43 | 36 | 43 | 43 | 41 | 36 |

Table 4 - Nucleation and characterization of inventive and comparative examples (Polymeric NA - masterbatch with polymeric nucleating agent; 2nd NA - [a] DMDBS resp. [b] NA-21; n.d. - not determined)

| Example | | IE1 | IE2 | IE3 | CE1 | CE2 | CE3 |
|---|---|---|---|---|---|---|---|
| Polymeric NA | wt% | 2 | 2 | 2 | 2 | 2 | 1 |
| 2nd NA | wt% | 0.2 [a] | 0.2 [a] | 0.1 [b] | 0 | 0 | 0.18 [a] |
| $MFR_2$(total) | g/10min | 43 | 36 | 43 | 43 | 41 | 36 |
| Tm(PP.DSC) | °C | 163 | 163 | 163 | 164 | 164 | 162 |
| Tm(PE.DSC) | °C | 103 | 101 | 101 | | | 101 |
| Tc(DSC) | °C | 130 | 130 | 129 | 130 | 130 | 126 |
| XCS(total) | wt% | 18.5 | 18.6 | 18.5 | 21.5 | 21.6 | 13.9 |
| C2(total) | wt% | 29.0 | 28.2 | 29.0 | 14.4 | 13.5 | 22.8 |
| C2(XCS) | wt% | 46.5 | 47.0 | 46.5 | 50.2 | 50.8 | 42.5 |
| iV(XCS) | dl/g | 1.5 | 1.6 | 1.5 | | | 1.4 |
| Flex.modulus | MPa | 1003 | 974 | 980 | 1001 | 990 | 1100 |
| IPT 23°C 1mm | J | 9.2 | 10.0 | 10.0 | 4.9 | 4.9 | n.d. |
| IPT -20°C 1mm | J | 6.2 | 6.7 | 8.1 | 5.3 | 6.1 | n.d. |
| Haze | % | 46 | 44 | 50 | 91 | 91 | 36 |
| FM / Haze | - | 21.8 | 22.1 | 19.6 | 11.0 | 10.9 | 30.6 |

**Claims**

1. A heterophasic polypropylene composition **characterized by** an MFR (230°C/2.16kg) of 30 -200 g/10 min, at least one melting point in the range of 150-165°C and an overall comonomer content of 25.0 to 50.0 wt%, comprising

a) 50-85 wt% of a propylene copolymer comprising 0.2 to 1.0 wt% of ethylene and/or a C4-C10 α-olefin having an MFR (230°C/2.16kg) of 50-250 g/10min
b) 5-25 wt% of an elastomeric propylene copolymer comprising ≥ 60 wt% of ethylene and/or a C4-C10 α-olefin
c) 10-25 wt% of an ethylene homo- or copolymer having an MFR (190°C/2.16kg) of 10-30 g/10min and a density of 910-920 kg/m$^3$ and
d) at least two α-nucleating agents.

2. A heterophasic polypropylene composition according to claim 1 further **characterized in that** the propylene copolymer a) comprising 0.2 to 1.0 wt% of ethylene and/a C4-C10 α-olefin comprises

   a1) 35 - 50 wt% based on the amount of the heterophasic polypropylene composition of a propylene homopolymer fraction
   a2) 20 - 35 wt% based on the amount of the heterophasic polypropylene composition of a propylene random copolymer fraction.

3. A heterophasic polypropylene composition according to claim 1 further **characterized in that** elastomeric propylene copolymer b) comprising ≥ 60 wt% of ethylene and/or a C4-C10 α-olefin comprises

   b1) 5 - 18wt% based on the amount of the heterophasic polypropylene composition of a first elastomeric ethylene-propylene copolymer fraction
   b2) 1 - 10 wt% based on the amount of the heterophasic polypropylene composition of a second elastomeric ethylene-propylene copolymer fraction.

4. A heterophasic polypropylene composition according to any of the preceding claims. **characterized in that**
   d1) one of the two or more nucleating agents comprised in the product of the present invention is a polymeric nucleating agent.

5. A heterophasic polypropylene composition according to any of the preceding claims. **characterised in that**
   d2) one of the two or more nucleating agents comprised in the product of the present invention is a sorbitol based nucleating agent.

6. A heterophasic polypropylene composition according to any of the preceding claims. **characterised in that**

   d1) one of the two or more nucleating agents comprised in the product of the present invention is a polymeric nucleating agent and
   d2) one of the two or more nucleating agents comprised in the product of the present invention is a sorbitol based nucleating agent.

7. A heterophasic polypropylene composition according to claim 1 further **characterized by** having

   a) a xylene cold soluble content (XCS) determined according ISO 16152 (25°C) of at least 15 - 30 wt% based on the amount of the heterophasic polypropylene composition and
   b) the comonomer content of the xylene cold soluble (XCS) fraction of heterophasic propylene copolymer is at least 40 - 60 wt%.

8. A heterophasic polypropylene composition according to claim 7, further **characterized by** having a ratio R,

$$R = FM \ [MPa] \ / \ H[\%] \ \text{in the range of 15 to 27,}$$

   wherein (FM) denotes the flexural modulus (H) the haze when measured on 1 mm plaques.

9. Articles comprising the heterophasic polypropylene composition according to any of the preceding claim.

10. Articles according to claim 9 **characterized by** a wall thickness of 300 micrometer to 2 mm.

11. Use of the heterophasic polypropylene composition according to any of the preceding claim for articles containing food, preferably frozen food.

**Patentansprüche**

1. Heterophasische Polypropylen-Zusammensetzung, **gekennzeichnet durch** eine MFR (230°C/2,16 kg) von 30-200 g/10 min, mindestens einen Schmelzpunkt im Bereich von 150-165°C und einen Gesamt-Conomer-Gehalt von 25,0 bis 50,0 Gew.-%, umfassend

   a) 50-85 Gew.-% eines Propylen-Copolymers, umfassend 0,2 bis 1,0 Gew.-% Ethylen und/oder ein C4-C10 α□Olefin mit einer MFR (230°C/2,16 kg) von 50-250 g/10 min
   b) 5-25 Gew.-% eines elastomeren Propylen-Copolymers, umfassend > 60 Gew.-% Ethylen und/oder ein C4-C10 α-Olefin
   c) 10-25 Gew.-% eines Ethylen-Homo- oder -Copolymers mit einer MFR (190°C/2,16 kg) von 10-30 g/10 min und einer Dichte von 910-920 kg/m$^3$ und
   d) mindestens zwei α-Nukleierungsmitteln.

2. Heterophasische Polypropylen-Zusammensetzung nach Anspruch 1, weiterhin **dadurch gekennzeichnet, dass** das Propylen-Copolymer a) 0,2 bis 1,0 Gew.-% Ethylen und/oder ein C4-C10-α-Olefin umfasst

   a1) 35-50 Gew.-%, bezogen auf die Menge der heterophasischen Polypropylen-Zusammensetzung einer Propylen-Homopolymer-Fraktion,
   a2) 20-35 Gew.-%, bezogen auf die Menge der heterophasischen Polypropylen-Zusammensetzung einer statistischen Propylen-Copolymer-Fraktion.

3. Heterophasische Polypropylen-Zusammensetzung nach Anspruch 1, weiterhin **dadurch gekennzeichnet, dass** elastomeres Propylen-Copolymer b), das ≥ 60 Gew.-% Ethylen und/oder ein C4-C10 α-Olefin umfasst, umfasst

   b1) 5-18 Gew.-%, bezogen auf die Menge der heterophasischen Polypropylen-Zusammensetzung, einer ersten elastomeren Ethylen-Propylen-Copolymer-Fraktion,
   b2) 1-10 Gew.-%, bezogen auf die Menge der heterophasischen Polypropylen-Zusammensetzung, einer zweiten elastomeren Ethylen-Propylen-Copolymer-Fraktion.

4. Heterophasische Polypropylen-Zusammensetzung nach einem der vorangehenden Ansprüche, **dadurch gekennzeichnet, dass**
   d1) eines der zwei oder mehreren Nukleierungsmittel, die im Produkt der vorliegenden Erfindung enthalten sind, ein polymeres Nukleierungsmittel ist.

5. Heterophasische Polypropylen-Zusammensetzung nach einem der vorangehenden Ansprüche, **dadurch gekennzeichnet, dass**
   d2) eines der zwei oder mehreren Nukleierungsmittel, die im Produkt der vorliegenden Erfindung enthalten sind, ein Nukleierungsmittel auf Sorbitbasis ist.

6. Heterophasische Polypropylen-Zusammensetzung nach einem der vorangehenden Ansprüche, **dadurch gekennzeichnet, dass**

   d1) eines der zwei oder mehreren Nukleierungsmittel, die im Produkt der vorliegenden Erfindung enthalten sind, ein polymeres Nukleierungsmittel ist und
   d2) eines der zwei oder mehreren Nukleierungsmittel, die im Produkt der vorliegenden Erfindung enthalten sind, ein Nukleierungsmittel auf Sorbitbasis ist.

7. Heterophasische Polypropylen-Zusammensetzung nach Anspruch 1, weiterhin **gekennzeichnet durch** Aufweisen von

   a) einem in kaltem Xylol löslichen Gehalt (XCS), bestimmt gemäß ISO 16152 (25°C), von mindestens 15-30 Gew.-%, bezogen auf die Menge der heterophasischen Polypropylen-Zusammensetzung, und
   b) wobei der Comonomer-Gehalt der in kaltem Xylol löslichen (XCS-)Fraktion des heterophasischen Propylen-Copolymers mindestens 40-60 Gew.-% beträgt.

8. Heterophasische Polypropylen-Zusammensetzung nach Anspruch 7, weiterhin **gekennzeichnet durch** Aufweisen von einem Verhältnis R,

$$R = FM \ [MPa] \ / \ H \ [\%] \ im \ Bereich \ von \ 15 \ bis \ 27,$$

wobei (FM) den Biegemodul, (H) die Trübung bezeichnet, wenn an 1 mm Platten gemessen wird.

**9.** Gegenstände, die die heterophasische Polypropylen-Zusammensetzung nach einem vorangehenden Anspruch umfassen.

**10.** Gegenstände nach Anspruch 9, **gekennzeichnet durch** eine Wanddicke von 300 Mikrometer bis 2 mm.

**11.** Verwendung der heterophasischen Polypropylen-Zusammensetzung nach einem vorangehenden Anspruch für Gegenstände, die Lebensmittel, vorzugsweise gefrorene Lebensmittel, enthalten.

**Revendications**

**1.** Composition de polypropylène hétérophasique **caractérisée par** un MFR (230°C/2,16 kg) de 30 à 200 g/10 min, au moins un point de fusion dans la plage de 150 à 165°C et une teneur globale en comonomères de 25,0 à 50,0 % en poids, comprenant

a) 50 à 85 % en poids d'un copolymère de propylène comprenant 0,2 à 1,0 % en poids d'éthylène et/ou d'une $\alpha$-oléfine en $C_4$ à $C_{10}$ ayant un MFR (230°C/2,16 kg) de 50 à 250 g/10 min,
b) 5 à 25 % en poids d'un copolymère de propylène élastomérique comprenant $\geq$ 60 % en poids d'éthylène et/ou d'une $\alpha$-oléfine en $C_4$ à $C_{10}$,
c) 10 à 25 % en poids d'un homo- ou co-polymère d'éthylène ayant un MFR (190°C/2,16 kg) de 10 à 30 g/10 min et une masse volumique de 910 à 920 kg/m$^3$, et
d) au moins deux agents d'a-nucléation.

**2.** Composition de polypropylène hétérophasique selon la revendication 1, **caractérisée en outre en ce que** le copolymère de propylène a) comprenant 0,2 à 1,0 % en poids d'éthylène et/ou d'une $\alpha$-oléfine en $C_4$ à $C_{10}$ comprend

a1) 35 à 50 % en poids, basés sur la quantité de la composition de polypropylène hétérophasique, d'une fraction d'homopolymère de propylène,
a2) 20 à 35 % en poids, basés sur la quantité de la composition de polypropylène hétérophasique, d'une fraction de copolymère statistique de propylène.

**3.** Composition de polypropylène hétérophasique selon la revendication 1, **caractérisée en outre en ce que** le copolymère de propylène élastomérique b) comprenant $\geq$ 60 % en poids d'éthylène et/ou d'une $\alpha$-oléfine en $C_4$ à $C_{10}$ comprend

b1) 5 à 18 % en poids, basés sur la quantité de la composition de polypropylène hétérophasique, d'une première fraction de copolymère d'éthylène-propylène élastomérique,
b2) 1 à 10 % en poids, basés sur la quantité de la composition de polypropylène hétérophasique, d'une deuxième fraction de copolymère d'éthylène-propylène élastomérique.

**4.** Composition de polypropylène hétérophasique selon l'une quelconque des revendications précédentes, **caractérisée en ce que**
d1) l'un des deux ou plus de deux agents de nucléation compris dans le produit de la présente invention est un agent de nucléation polymérique.

**5.** Composition de polypropylène hétérophasique selon l'une quelconque des revendications précédentes, **caractérisée en ce que**
d2) l'un des deux ou plus de deux agents de nucléation compris dans le produit de la présente invention est un agent de nucléation à base de sorbitol.

**6.** Composition de polypropylène hétérophasique selon l'une quelconque des revendications précédentes, **caractérisée en ce que**

d1) l'un des deux ou plus de deux agents de nucléation compris dans le produit de la présente invention est un agent de nucléation polymérique, et
d2) l'un des deux ou plus de deux agents de nucléation compris dans le produit de la présente invention est un agent de nucléation à base de sorbitol.

**7.** Composition de polypropylène hétérophasique selon la revendication 1, **caractérisée en outre en ce qu'**elle a

a) une teneur en composés solubles dans le xylène froid (XCS), déterminée conformément à la norme ISO 16152 (25°C), d'au moins 15 à 30 % en poids basés sur la quantité de la composition de polypropylène hétérophasique, et
b) une teneur en comonomères de la fraction soluble à froid dans le xylène (XCS) du copolymère de propylène hétérophasique d'au moins 40 à 60 % en poids.

**8.** Composition de polypropylène hétérophasique selon la revendication 7, **caractérisée en outre en ce qu'**elle a un rapport R,

$$R = FM \; [MPa] \; / \; H \; [\%] \; \text{dans la plage de 15 à 27,}$$

où (FM) désigne le module de flexion et (H) le voile lors d'une mesure sur des plaques de 1 mm.

**9.** Articles comprenant la composition de polypropylène hétérophasique selon l'une quelconque des revendications précédentes.

**10.** Articles selon la revendication 9, **caractérisés par** une épaisseur de paroi de 300 micromètres à 2 mm.

**11.** Utilisation de la composition de polypropylène hétérophasique selon l'une quelconque des revendications précédentes pour des articles contenant des aliments, de préférence des aliments congelés.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2594593 A1
- EP 1659151 A1
- EP 2431416 A1
- EP 2338656 A1
- EP 2014714 A
- EP 14174690 A
- EP 2516125 A1

**Non-patent literature cited in the description**

- Encyclopaedia of Polymer Science and Engineering. vol. 6, 545-558